# EUROPEAN PATENT APPLICATION

(11) **EP 4 480 749 A1**
(43) Date of publication of application: **25.12.2024**
(21) Application number: 23765886.9
(22) Date of filing: 02.03.2023
(51) Int. Cl.: B60N 3/10, G06F 3/01

(54) **SMART CUP HOLDER AND VEHICLE**

(30) Priority: 07.03.2022 CN 202220482652 U
(71) Applicant: Beijing Chehejia Automobile Technology Co., Ltd., Beijing 101300 (CN)
(72) Inventor: LI, Jilong, Beijing 101300 (CN)
(74) Representative: Regimbeau
(86) International application number: PCT/CN2023/079395
(87) International publication number: WO 2023/169308

(57) **Abstract**

A smart cup holder, comprising: a first sensor (001) that is provided in a driver's compartment and has an output end connected to a receiving end of a controller (007); a storage cavity (004) that is provided in a target area in the driver's compartment, the storage cavity (004) being provided with an upward opening, and the opening being located in the sensing area of the first sensor (001); a lifting device that comprises: a support member (002), a driving motor (006), and a transmission assembly (003), the support member (002) being adapted to the opening and being in the same plane as the opening when in an initial state; and a controller (007) that is used for controlling the driving motor (006) and the transmission assembly (003) to drive the support member (002) to move up and down in the storage cavity (004). Also disclosed is a vehicle comprising the smart cup holder.

## Description

### CROSS-REFERENCE TO RELATED APPLICATION

This application claims priority to Chinese Patent Application No. 202220482652.3, filed on March 7, 2022, the contents of which are hereby incorporated by reference in its entirety.

### TECHNICAL FIELD

The present application relates to the technical field of vehicle devices, in particular to a smart cup holder and a vehicle.

### BACKGROUND

In many modern vehicles, a cup holder brings many conveniences. The cup holder may be provided in multiple locations in the vehicle, including, for example, a center console and both sides of a door. In the related art, the cup holder provided in the vehicle is usually an open cup holder, especially an open cup holder provided on a smart driving panel. After a cup is placed on the open cup holder, there is a risk that a normal driving control of a driver is affected. In addition, the open cup holder occupies a relatively large space, which will affect the overall aesthetic of an interior of the vehicle.

### SUMMARY

The present application is intended to solve at least one of the technical problems in the related art to a certain extent.

For this purpose, an object of the present application is to propose a smart cup holder. The smart cup holder includes a sensing assembly, an accommodating cavity, a lifting device, and a controller. The sensing assembly includes a first sensor and the controller. The first sensor is provided in a cockpit, and an output end of the first sensor is connected to a receiving end of the controller. The accommodating cavity is provided in a target area in the cockpit, and the accommodating cavity is provided with an opening oriented vertically upward. The opening is provided in a sensing area of the first sensor. The lifting device includes a support member and a driving member. The support member is adapted to the opening and is positioned in a same plane as the opening in an initial state, and the driving member is configured to drive the support member to move vertically in the accommodating cavity. The controller is configured to control an operation of the driving member.

In some embodiments, the first sensor is a light sensor or an image sensor, and the first sensor is provided on a top portion in the cockpit.

In some embodiments, the first sensor is a pressure sensor, and the first sensor is provided on the support member.

In some embodiments, the pressure sensor is configured to convert a pressure signal into an electrical signal, send the electrical signal to the controller for processing, and determine that a cup is placed on the support member in response to detecting that a sustained pressure is present and a value of the sustained pressure is greater than a pressure threshold.

In some embodiments, the controller is further configured to generate a signal to control other components to perform an operation of accommodating the cup in response to determining that the cup is placed on the support member.

In some embodiments, the smart cup holder includes a second sensor. The second sensor is provided on a bottom portion of the accommodating cavity, and the second sensor is connected to the controller.

In some embodiments, the controller is configured to, after the support member is lowered to a lowest height, receive information sent by the second sensor, generate a stop signal, and send the stop signal to the driving member.

In some embodiments, the driving member includes a driving motor and a transmission assembly. The driving motor is connected to the controller, and the driving motor is configured to drive the transmission assembly to perform a transmission under a control of the controller, to drive the support member to move vertically.

In some embodiments, an output end of the driving motor is connected to a first bevel gear, the first bevel gear is meshed with a second bevel gear, the second bevel gear is fixed on a screw rod, a transmission nut is screwed to the screw rod, and a transmission rod is fixed on the transmission nut. One side of the accommodating cavity is provided with a limiting mechanism, the limiting mechanism is configured to cooperate with a vertical movement of the transmission rod, and the transmission rod is fixedly connected to the support member.

In some embodiments, the accommodating cavity is provided with a limiting mechanism. The limiting mechanism is configured to cooperate with a vertical movement of a connection component between the transmission assembly and the support member.

In some embodiments, the controller is configured to control the transmission assembly to drive the support member to move vertically upward in response to the first sensor detecting that a cup is placed on the support member; or the controller is configured to control the transmission assembly to drive the support member to move vertically downward in response to the first sensor detecting that a cup is taken out from the support member.

In some embodiments, the smart cup holder includes a waste tank. A bottom portion of the accommodating cavity is provided with a drain hole, and the drain hole is connected to the waste tank through a flow guiding duct.

In some embodiments, the target area includes a smart driving panel, and/or an accommodating area of a driving door, and/or an instrument panel.

A second objection of the present application is to propose a vehicle including the smart cup holder described above.

In some embodiments, the first sensor is provided on a top portion in a cockpit of the vehicle, and an acquisition end of the first sensor is aligned with at least one of a smart driving panel, an accommodating area of a driving door, or an instrument panel.

By monitoring that the cup is taken out or put down by the persons inside the vehicle, and controlling the lifting device to achieve automatic rising or lowering of the cup, smart sensing may be realized, space in the vehicle may be saved, and technological sense and overall aesthetic of the vehicle may be improved.

### BRIEF DESCRIPTION OF THE DRAWINGS

FIG. 1 is an overall schematic diagram of a smart cup holder according to an embodiment of the present application;
FIG. 2 is a schematic diagram of a transmission assembly of a smart cup holder according to an embodiment of the present application; and
FIG. 3 is a schematic diagram of a second sensor of a smart cup holder according to an embodiment of the present application.

### DETAILED DESCRIPTION

Embodiments of the present application are described in detail below, and examples of the embodiments are illustrated in the accompanying drawings. Throughout the present application, the same or similar reference numerals denote the same or similar elements or elements having the same or similar functions. The embodiments described below with reference to the accompanying drawings are exemplary and are used to explain the present application, but not intended to limit the present application.

In the related art, a cup holder provided in a vehicle is usually an open cup holder, especially an open cup holder provided on a smart driving panel. After a cup is placed on the cup holder by the user, the protruding cup may affect the operation of the driver's right hand, causing driving risks. In addition, the open cup holder occupies a relatively large space, which will affect the overall aesthetic of an interior of the vehicle.

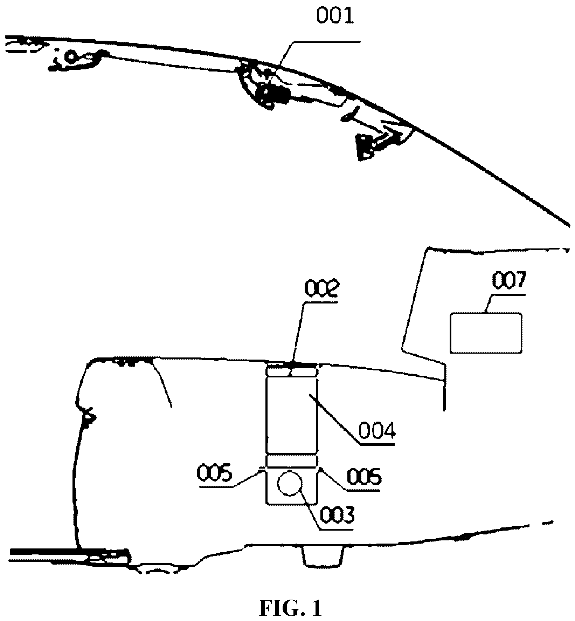

In order to solve the above problems, the present application provides a smart cup holder. In the present application, by monitoring the action of the persons inside a vehicle to take out or put down a cup, and controlling a lifting device to achieve automatic rising or lowering of the cup, smart sensing may be realized. In addition, space in the vehicle may be saved, and technological sense and overall aesthetic of the vehicle may be improved. FIG. 1 is an overall schematic diagram of a smart cup holder proposed in the present application. As shown in FIG. 1, the smart cup holder includes a sensing assembly, an accommodating cavity, a lifting device, and a controller. The sensing assembly includes a first sensor 001 and the controller 007. The first sensor 001 is provided in a cockpit. An output end of the first sensor 001 is connected to a receiving end of the controller 007.

It should be noted that a connection between the first sensor 001 and the controller 007 may be a wired connection, or may be a wireless connection, which may be specifically set according to actual situations. For example, the wireless connection may be a communication signal connection, a Bluetooth signal connection or the like.

In the present application, the first sensor 001 may be an image acquisition device configured to acquire an image of a target area in the cockpit and send the image to the controller 007 for processing. For example, the image acquisition device may be a vehicle-mounted photographic camera, a vehicle-mounted video camera or the like, which may be specifically set according to actual situations.

In some embodiments, the first sensor 001 may also be an optical signal acquisition device. The optical signal acquisition device may be configured to acquire optical information in the target area, convert the optical information into an electrical signal, and send the electrical signal to the controller 007 for processing.

In some embodiments, the first sensor 001 may also be a pressure sensor. The pressure sensor is provided on the support member 002. The pressure sensor may be configured to convert a pressure signal into an electrical signal, and send the electrical signal to the controller 007 for processing. It may be determined that a cup is placed on the support member 002 by the user in response to detecting that a sustained pressure is present and a value of the sustained pressure is greater than a pressure threshold. It should be noted that duration of the pressure and the pressure threshold may be set according to actual situations.

In the embodiments of the present application, the first sensor 001 is provided on a top portion in the cockpit. An acquisition end of the first sensor is aligned with the target area, which facilitates accurate acquisition of information of the target area, to ensure that the controller 007 generates an accurate control signal.

In some embodiments, the controller 007 may determine whether the cup is placed on the support member 002 according to the information sent by the first sensor 001, and generate a signal to control other components to perform an operation of accommodating the cup in response to determining that the cup is placed on the support member 002.

In some embodiments, the controller 007 may further determine the action intention of the user according to the information sent by the first sensor 001, and generate a signal to control other components to perform an operation of accommodating the cup in response to determining that the action of the user for placing the cup on the support member 002 is completed.

The smart cup holder further includes an accommodating cavity 004. The accommodating cavity 004 is provided in the target area in the cockpit. It should be noted that the target area may be provided on a smart driving panel, and/or an accommodating area of a driving door, and/or an instrument panel, which may be specifically defined according to actual designs.

In the present application, the accommodating cavity 004 is provided with an opening oriented vertically upward. The accommodating cavity is configured to accommodate a cup. A depth and a diameter of the accommodating cavity may be set according to actual needs. For example, for a private vehicle, the depth of the accommodating cavity may be 20 cm, and the diameter of the accommodating cavity may be 5 cm; for a truck that needs to travel a long distance, the depth of the accommodating cavity may be 30 cm, and the diameter of the accommodating cavity may be 8 cm.

It should be noted that the opening is provided in a sensing area of the first sensor 001, to allow an operating state of the accommodating cavity to be monitored.

The lifting device includes a support member 002 and a driving member. The driving member is configured to drive the support member 002 to move vertically in the accommodating cavity 004.

It should be noted that the accommodating cavity 004 is provided with a limiting mechanism. The limiting mechanism is configured to cooperate with a vertical movement of a connection component between a transmission assembly 003 and the support member 002.

In the embodiments of the present application, the limiting mechanism is configured to fix or limit the position of the support member after the support member reaches a specified position. For example, the limiting mechanism may be a limiting groove, a limiting hole or the like, which may be specifically set according to actual needs.

In the embodiments of the present application, the driving member includes a driving motor 006 and a transmission assembly 003. The driving motor 006 is connected to the controller 007, and the driving motor is configured to drive the transmission assembly 003 to perform a transmission under a control of the controller 007, to drive the support member 002 to move vertically.

It should be noted that the controller 007 may determine whether to raise or lower the smart cup holder according to the information fed back by the first sensor 001 and a second sensor 005 to generate a corresponding command, and send the corresponding command to the transmission assembly 003.

In the embodiments of the present application, the transmission assembly 003 may be a transmission shaft, a transmission gear or the like, which may be specifically set according to actual needs.

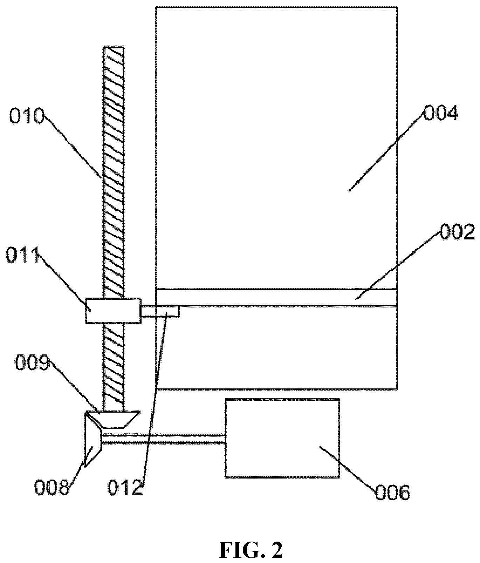

In some embodiments, as shown in FIG. 2, the transmission assembly 003 may be a transmission screw rod. An output end of the driving motor 006 is connected to a first bevel gear 008. The first bevel gear 008 is meshed with a second bevel gear 009. The second bevel gear 009 is fixed on a screw rod 010. A transmission nut 011 is screwed to the screw rod 010. A transmission rod 012 is fixed on the transmission nut 011. One side of the accommodating cavity 004 is provided with a limiting mechanism. The limiting mechanism is configured to cooperate with a vertical movement of the transmission rod 012, and the transmission rod 012 is fixedly connected to the support member 002. As such, the first bevel gear 008 is driven through the output end of the driving motor 006, the second bevel gear 009 is driven by the rotation of the first bevel gear 008, and the screw rod 010 is driven into rotation by the rotation of the second bevel gear 009. Since the first transmission rod 012 is limited in the limiting mechanism, the transmission nut 011 cannot rotate, so that the transmission nut 011 moves vertically with the rotation of the screw rod 010.

It should be noted that the connection between the second sensor 005 and the controller 007 may be a wired connection, or may be a wireless connection, which may be specifically set according to actual situations. For example, the wireless connection may be a communication signal connection, a Bluetooth signal connection or the like.

In the embodiments of the present application, when the user places the cup on the support member 002, the first sensor 001 sends the acquired information to the controller 007, and then the driving motor 006 outputs in a forward direction under the control of the controller 007, to achieve the purpose of raising the support member 002 through the transmission assembly 003. When the user takes out the cup, the first sensor 001 sends the acquired information to the controller 007, and then the driving motor 006 outputs in a reverse direction under the control of the controller 007, to achieve the purpose of lowering the support member 002 through the transmission assembly 003.

In the embodiments of the present application, an upper surface of the support member 002 and a surface of the smart driving panel are flush with each other and form a complete flat surface, thereby increasing the simplicity of the interior of the vehicle, and improving the overall aesthetic of the vehicle.

In some embodiments, a material of the support member 002 and a material of the smart driving panel are the same material, thereby increasing the integrity of the interior of the vehicle, and improving the overall aesthetic of the vehicle.

In some embodiments, the support member 002 may be further made through other appearance processing processes according to design needs, so that the richness of the interior of the vehicle may be increased, and the user may find the position of the support member 002 more conveniently, thereby placing the cup more conveniently.

The controller 007 is configured to control an operation of the driving member.

It should be noted that the controller 007 may be a Micro Controller Unit, MCU, a vehicle-mounted processor or the like, which may be specifically set according to actual situations.

In the present application, the controller 007 is configured to receive information fed back by the first sensor 001 and the second sensor 005, and generate a command according to the information to control the operation of the driving member.

The accommodating cavity 004 is provided with a lowest height at which the support member 002 is lowered to the lowest position, to prevent the damage to the cup holder and the cup due to the excess lowering of the support member 002. It should be noted that the lowest height may be set according to the actual cup type or the actual needs. In some embodiments, the controller 007 may determine the cup type according to the information sent by the first sensor 001, and then determine the lowest height according to the cup type.

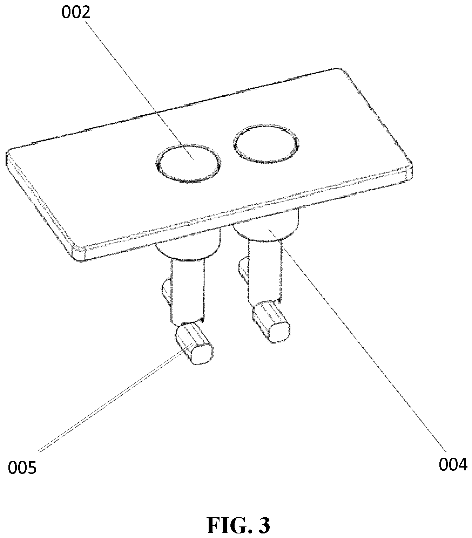

In the embodiments of the present application, as shown in FIG. 3, the smart cup holder may determine whether the cup reaches the lowest height through the second sensor 005. The second sensor 005 is provided on a bottom portion of the accommodating cavity 004, and the second sensor 005 is connected to the controller 007. In some embodiments, the second sensor 005 may be a weight sensor. When the second sensor 005 senses that a weight pressure reaches a pressure threshold, it may be determined that the support member 002 is lowered to the lowest height. The second sensor 005 feeds the information back to the controller 007, and then the controller 007 controls the driving member to stop operating. It should be noted that the pressure threshold is not constant, which may be set according to actual needs.

In some embodiments, the second sensor 005 may also be a grating sensor. When the support member 002 is lowered to the lowest height, an optical signal received by the grating sensor is less than an optical signal threshold. In this case, the second sensor 005 feeds the information back to the controller 007, and then the controller 007 controls the driving member to stop operating.

In order to prevent the smart cup holder from being corroded due to the leakage of the water in the cup, the smart cup holder in the present application is further provided with a waste tank configured for accommodating the water leaked from the cup. It should be noted that a bottom portion of the accommodating cavity 004 is provided with a drain hole, and the drain hole is connected to the waste tank through a flow duct.

In the embodiments of the present application, when the operation of accommodating the cup needs to be performed, the first sensor 001 acquires information of the accommodating cavity 004 in the target area, and then sends the information to the controller 007 for processing. Then, the controller 007 generates a command and sends the command to the transmission assembly 003 in response to the controller 007 determining that a condition for accommodating the cup is met. Then, the transmission assembly 003 drives the cup to move vertically downward in the accommodating cavity 004. When the support member 002 is lowered to the lowest height, the second sensor 005 feeds the information back to the controller 007, and the controller 007 controls the driving member to stop operating. When the cup is picked up, the first sensor 001 acquires information of the accommodating cavity 004 in the target area, and then sends the information to the controller 007 for processing. Then, in response to the controller 007 determining that a condition for raising the support member is met, the transmission assembly 003 drives the support member 002 to move vertically upward, until the support member reaches a second height. Then, the controller 007 receives the information fed back by the first sensor 001 and generates a command to control the transmission assembly 003 to stop operating. In this case, the opening of the accommodating cavity 004 is closed by the support member 002.

The embodiments of the present application further disclose a vehicle including the smart cup holder as described above. By monitoring that the cup is taken out or put down by the persons inside the vehicle, and controlling the transmission device to achieve automatic rising or lowering of the cup, smart sensing may be realized. In addition, space in the vehicle may be saved, and technological sense and overall aesthetic of the vehicle may be improved.

In the present application, a power supply of all the above components may be provided by the corresponding vehicle, or may also be provided by a battery, a motor or the like, which may be specifically set according to actual situations.

In the description of the present application, it should be understood that terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential" and the like that indicate relations of directions or positions are based on the relations of directions or positions shown in the accompanying drawings, which are only to facilitate description of the present application and to simplify the description of the present application, rather than to indicate or imply that the referred device or element is limited to the specific direction or to be configured and operated in the specific direction. Therefore, the above-mentioned terminologies shall not be interpreted as confine to the present application.

In addition, terms "first" and "second" are only used for description and should not be understood to indicate or imply relative importance or implicitly indicate the number of indicated technical features. Therefore, a feature defined by "first" and "second" may explicitly or implicitly indicate inclusion of one or more such features. In the description of the present application, "multiple" means two or more, unless otherwise limited definitely and specifically.

In the present application, the terms "one embodiment", "some embodiments", "example", "specific example" or "some examples" indicates that a specific feature, structure, material or characteristic described in combination with the embodiment or example is included in at least one embodiment or example of the present application. In the specification, the schematic representation of the above terms is not necessary to be directed to the same embodiment or example. Further, the specific feature, structure, material, or characteristic described may be combined in any one or more embodiments or examples in a suitable manner. Furthermore, without contradiction, those skilled in the art may combine the different embodiments or examples and the features in the different embodiments or examples described in the specification.

Although the above embodiments have been shown and described, it should be understood that the above embodiments are exemplary and cannot be understood as a limitation of the present application. Changes, modifications, substitutions, and variants to the above embodiments made by those of ordinary skill in the art are within the protection scope of the present application.

## Claims

1. A smart cup holder, comprising:
a sensing assembly, the sensing assembly comprising a first sensor and a controller, wherein the first sensor is provided in a cockpit, and an output end of the first sensor is connected to a receiving end of the controller;
an accommodating cavity, wherein the accommodating cavity is provided in a target area in the cockpit, and the accommodating cavity is provided with an opening oriented vertically upward, wherein the opening is provided in a sensing area of the first sensor;
a lifting device, the lifting device comprising a support member and a driving member, wherein the support member is adapted to the opening and is positioned in a same plane as the opening in an initial state, and the driving member is configured to drive the support member to move vertically in the accommodating cavity; and
the controller, wherein the controller is configured to control an operation of the driving member.

2. The smart cup holder according to claim 1, wherein the first sensor is a light sensor or an image sensor, and the first sensor is provided on a top portion in the cockpit.

3. The smart cup holder according to claim 1, wherein the first sensor is a pressure sensor, and the first sensor is provided on the support member.

4. The smart cup holder according to claim 3, wherein the pressure sensor is configured to convert a pressure signal into an electrical signal, send the electrical signal to the controller for processing, and determine that a cup is placed on the support member in response to detecting that a sustained pressure is present and a value of the sustained pressure is greater than a pressure threshold.

5. The smart cup holder according to claim 4, wherein the controller is further configured to generate a signal to control other components to perform an operation of accommodating the cup in response to determining that the cup is placed on the support member.

6. The smart cup holder according to claim 1, further comprising:
a second sensor, wherein the second sensor is provided on a bottom portion of the accommodating cavity, and the second sensor is connected to the controller.

7. The smart cup holder according to claim 6, wherein the controller is configured to, after the support member is lowered to a lowest height, receive information sent by the second sensor, generate a stop signal, and send the stop signal to the driving member.

8. The smart cup holder according to claim 1, wherein the driving member comprises:
a driving motor and a transmission assembly, wherein the driving motor is connected to the controller, and the driving motor is configured to drive the transmission assembly to perform a transmission under a control of the controller, to drive the support member to move vertically.

9. The smart cup holder according to claim 8, wherein the transmission assembly is a transmission screw rod;
wherein an output end of the driving motor is connected to a first bevel gear, the first bevel gear is meshed with a second bevel gear, the second bevel gear is fixed on a screw rod, a transmission nut is screwed to the screw rod, and a transmission rod is fixed on the transmission nut; and
wherein one side of the accommodating cavity is provided with a limiting mechanism, wherein the limiting mechanism is configured to cooperate with a vertical movement of the transmission rod, and the transmission rod is fixedly connected to the support member.

10. The smart cup holder according to claim 8, wherein
the accommodating cavity is provided with a limiting mechanism, wherein the limiting mechanism is configured to cooperate with a vertical movement of a connection component between the transmission assembly and the support member.

11. The smart cup holder according to claim 8, wherein the controller is configured to control the transmission assembly to drive the support member to move vertically upward in response to the first sensor detecting that a cup is placed on the support member; or
wherein the controller is configured to control the transmission assembly to drive the support member to move vertically downward in response to the first sensor detecting that a cup is taken out from the support member.

12. The smart cup holder according to claim 1, further comprising:
a waste tank, wherein a bottom portion of the accommodating cavity is provided with a drain hole, and the drain hole is connected to the waste tank through a flow duct.

13. The smart cup holder according to claim 1, wherein the target area comprises a smart driving panel, and/or an accommodating area of a driving door, and/or an instrument panel.

14. A vehicle, comprising the smart cup holder according to any one of claims 1 to 13.

15. The vehicle according to claim 14, wherein the first sensor is provided on a top portion in a cockpit of the vehicle, and an acquisition end of the first sensor is aligned with at least one of a smart driving panel, an accommodating area of a driving door, or an instrument panel.
